# EUROPEAN PATENT APPLICATION

(11) **EP 2 228 343 A1**
(43) Date of publication of application: **15.09.2010**
(21) Application number: 09003642.7
(22) Date of filing: 13.03.2009
(51) Int. Cl.: C01B 31/02

(54) **Water vapour assisted ozonolysis of carbon nanotubes**

(71) Applicant: Bayer MaterialScience AG, 51368 Leverkusen (DE)
(72) Inventor: Meyer, Helmut, Dr., 51519 Odenthal (DE); Bahnmüller, Stefan, Dr., 049514 Singapore (SG); Hitzbleck, Julia, Dr., 50668 Köln (DE); Zhang, Zhong, 100190 Beijing (CN); Liu, Lu-Qi, 100191 Beijing (CN); Peng, Ke, 400084 Chongqiang (CN); Li, Hongchao, 201204 Shanghai (CN)

(57) **Abstract**

The present invention relates to an improved process of ozonolysis of carbon nanotubes assisted by water vapour. The improved methodology provides an eco-friendly, cheaper, practical and efficient approach to functionalize carbon nanotubes with oxygen-containing moieties for further chemical functionalization and composite dispersion.

## Description

The present invention relates to an improved process of ozonolysis of carbon nanotubes assisted by water vapour. The improved methodology provides an eco-friendly, cheaper, practical and efficient approach to functionalize carbon nanotubes with oxygen-containing moieties for further chemical functionalization and composite dispersion.

Due to their high aspect ratio, light-weight, flexibility, high mechanical strength, outstanding thermal and electronic properties, carbon nanotubes (CNTs) have attracted great interests during the past decades for numerous applications, such as heterogeneous catalyst supports, sensory devices, next generation electronic devices, and novel polymer nano-composites.

Carbon nanotubes, according to the prior art, are understood as being mainly cylindrical carbon tubes having a diameter of from 3 to 100 nm and a length that is a multiple of the diameter. These tubes consist of one or more layers of ordered carbon atoms and have a core that differs in terms of morphology. These carbon nanotubes are also referred to as "carbon fibrils" or "hollow carbon fibers", for example.

Carbon nanotubes have been known for a long time in the specialist literature. Although Iijima (publication: S. Iijima, Nature 354, 56-58, 1991) is generally considered to have discovered nanotubes, such materials, in particular fibrous graphite materials having a plurality of graphite layers, have been known since the 1970s or early 1980s. The deposition of very fine fibrous carbon from the catalytic decomposition of hydrocarbons was described for the first time by Tates and Baker (GB 1469930A1, 1977 and EP 56004 A2, 1982). However, the carbon filaments produced on the basis of short-chained hydrocarbons are not described in greater detail in respect of their diameter.

Conventional structures of such tubes are those of the cylinder type. In the case of cylindrical structures, a distinction is made between single-wall monocarbon nanotubes and multi-wall cylindrical carbon nanotubes. Conventional processes for their production are, for example, arc discharge, laser ablation, chemical vapor deposition (CVD process) and catalytic chemical vapor deposition (CCVD process).

Such cylindrical carbon nanotubes can also be prepared by an arc discharge process. Iijima, Nature 354, 1991, 56-58 reports on the formation, by the arc discharge process, of carbon tubes consisting of two or more graphene layers which are rolled up to form a seamless closed cylinder and are nested inside one another. Chiral and achiral arrangements of the carbon atoms along the longitudinal axis of the carbon fibers are possible depending on the rolling vector.

Similar structures of carbon tubes, in which a cohesive graphene layer (so-called scroll type) or a broken graphene layer (so-called onion type) is the basis for the structure of the nanotube, were first reported by Bacon et al., J. Appl. Phys. 34, 1960, 283-90. This structure usually is designated as scroll type. Similar structures were later also found by Zhou et al., Science, 263, 1994, 1744-1747 and by Lavin et al., Carbon 40, 2002, 1123-1130.

However, the extended π-conjugated framework that contributes to the properties of CNTs is also responsible for strong van der Waals interactions among carbon nanotubes, which aggregate CNTs into large bundles that are completely insoluble in all organic and aqueous solvents. Therefore, the poor dispersion into solvents and polymers poses a significant hurdle to their exploitation in many potential commercial applications, including polymer nano-composites based on dispersed CNTs.

In the past years, great efforts have been made to enhance the dispersion of CNTs within various solvents and polymer matrices. The major methodologies employed to modify the surface of the nanotubes were using strong liquid oxidizing agents, such as concentrated HNO₃/H₂SO₄ or hydrogen peroxide, in order to introduce carboxylic, hydroxyl, and/or ester groups onto nanotube surface [see J. Am. Chem. Soc. 2003, 125, 9761-9769, Langmuir 2005, 21, 4185-4190 and Jap Pat Nat Pub No 11-502494].

However, it has to be emphasized that lots of hazardous chemicals would be formed during oxidizing process, which are harmful to environment and health. Moreover, the wet oxidation methods also involve several steps, including solid-liquid mixing, solid-liquid filtration, and removal of excess acid as well as drying before obtaining the final product. Another unfavourable side effect of strong oxidization is the simultaneous destruction of the carbon nanotubes themselves, which harms their mechanical strength and integrity.

Several papers and patents have been reported to modify carbon nanotube surfaces by ozonolysis, most of which were carried out in liquid-phase (see U.S. Pat. NO. US20060159612, CN101112981). As an alternative approach, oxidization of carbon nanotube surface by gaseous ozonolysis is practically feasible due to its convenient processing, environmentally friendly and relatively low cost. Some patents claimed using gaseous ozone to treat carbon nanotubes, however, there are still some limitations of current methods, such as the requirement of extreme harsh temperature (U.S. Pat. No. US20080102020, WO200107694, CN101185900 and US7122165), long treatment time (3-45 hours, see U.S. Pat. No. US20080031802, WO2006135439 and CN101189373), pure/relative-high ozone concentration (see US7122165 and U.S. Pat. No. US20080152573), or the resulting carbon nanotubes exhibit a strong acid titer (US7413723).

In the present work, we developed a novel methodology to oxidize CNTs by introducing water vapour into ozone/oxygen mixture. The reported process only requires a short exposure time and relative low concentrations (below 5 wt. %) of ozone, so that it is beneficial to the potential commercial applications.

The present invention provides ozonized carbon nanotubes with oxygen-containing groups including i.e. carboxylic groups, carbonyl groups, hydroxyl groups, and others all attached to their end-caps and side-walls. [The characterization of oxygen moieties attached onto nanotube surface has been conducted by XPS and FTIR.]

The present invention provides ozonized carbon nanotubes in which about 1% to 20% on molar basis functional oxygenated moieties has been attached to the surface of carbon nanotubes.

The present invention provides ozonized carbon nanotubes which are easy to be dispersed into polar inorganic and organic solvents and the formed dispersion will be stable for many days.

The present invention also includes a method of ozonolysis of carbon nanotubes, including single-walled carbon nanotubes, double-walled carbon nanotubes, multi-walled carbon nanotubes, carbon nanofibers e.g. in fishbone and platelet structure, as well as graphenes and carbon blacks. In addition, these carbon structures may be modified by heteroatoms in their graphitic layers like nitrogene, boron, and others. The purity of carbon nanotubes is more than 95wt%. The carbon nanotubes have diameters below 150 nm. The length of the multi-walled carbon nanotubes is from 0.1 micron to 100 micron.

The present invention includes a method comprises exposing carbon nanotubes to an ozone/oxygen mixture in the presence of water vapour to form ozonized carbon nanotubes.

One subject matter of the invention is a process of functionalization of carbon nanotubes by simultaneous treatment with oxygen/ozone in the gas phase comprising
a) placing carbon nanotubes into a reaction zone
b) passing a mixture of ozone, oxygen and water through the carbon nanotubes.

The exposure of the carbon nanotubes to ozone/oxygen mixture in the presence of water vapour takes place at a temperature of up to about 200 °C. The ozone/oxygen mixture is continuously passed through a vertical reactor which is fed with carbon nanotubes, with a flow rate from about 100 l/hour to about 1000 l/hour per g of carbon nanotubes. The exposure condition of carbon nanotubes is from about 0.1% to 100% of relative humidity in the vertical reaction chamber. The time of ozonolysis of carbon nanotubes is no more than 120 minutes.

The ozonized carbon nanotubes, and the methods of making the same, of the present invention provide several advantages over current technology. For example, unlike other methods which require harsh temperatures during ozonolysis of carbon nanotubes, either in high temperature (200-600 °C) or in extremely low temperature (-95--55 °C), the present invention provides a very mild ozonolysis treatment of carbon nanotubes at about room temperature.

Furthermore, unlike current technology in which ozonolysis needs pure ozone or high ozone concentration, the present invention provides a method to functionalize carbon nanotubes with oxygen moieties under low ozone concentration.

Moreover, unlike current method in which the ozonolysis requires long exposure time of carbon nanotubes to ozone oxidizing agents, the present invention provides an efficient method to treat carbon nanotubes with ozone/oxygen mixture in the presence of water moisture which only needs about 30 minutes.

The ozonolysis was carried out in a vertical reactor chamber with metal screen at the bottom in which the carbon nanotubes were placed. A mixture of ozone/oxygen with water was passed through the reactor chamber. Overall flowrate could be adjusted from 0 to 1000 l/hour, with ozone concentration ranging from 0 to 10% in the gas mixture. Humidity (relative humidity) could be adjusted preferably from 0 to 90%. In the examples with water vapor present, relative humidity was adjusted to be at least 50% relative humidity.

The present invention relates to ozonized carbon nanotubes with a high degree of oxygen-containing moieties attached to the surface, both to the side-walls and end-caps.

A carbon nanotube of the present invention refers to a graphene sheet in cylindrical form. The side-walls of a carbon nanotubes is the outer surface of graphene sheet, and end-cap of a carbon nanotubes is the hemispherical cap parts on one or both ends of a carbon nanotube. A carbon nanotube of the present invention can be a semi-conducting carbon nanotube or a metallic conducting carbon nanotube.

Preferably, a carbon nanotube with a high purity is used in the present invention. The purity refers here to percentage of carbon nanotubes in the mixture of carbon nanotubes with any contaminant materials, such as metallic residues and amorphous impurities. The purity of a carbon nanotube in the present invention is more than 95%, preferably more than 98%.

A carbon nanotube of the present invention is either a single-walled carbon nanotube (SWCNT) or a double walled carbon nanotube (DWCNT) or a multi-walled carbon nanotube (MWCNT). It can also be a carbon nanofiber in fishbone or platelet structure or a graphene or graphitic sheet. All these carbon structures may include heteroatoms in their graphitic layers like nitrogene, boron, and others.

Carbon nanotubes according to this invention comprise all single-walled or multi-walled carbon nanotube structures based on cylinder type, scroll type, or onion type structure. Preferred are multi-walled carbon nanotubes of cylinder type or scroll type or mixtures thereof.

Preferably, carbon nanotubes with a length to diameter ration of higher than 5, most preferably of higher than 100 are used.

Most preferably, carbon nanotubes in the form of agglomerates are used, wherein the agglomerates have an average diameter in the range of 0,05 to 5 mm, preferably 0,1 to 2 mm, an most preferably 0,2 to 1 mm.

The mean diameter of the carbon nanotubes is from 3 to 100 nm, preferably from 5 to 80 nm, particularly preferably from 6 to 60 nm.

In contrast to the previous CNTs described in the literature, with structures of the scroll type having only one continuous or broken graphene layer, in the novel structural forms of carbon a plurality of graphene layers are combined to form a pile, which is in rolled-up form (multi-scroll type). Such carbon nanotubes and carbon nanotube agglomerates are, for example, subject of the yet unpublished German patent application with official application no. 102007044031.8 whose content regarding the CNT and their production herewith will be included in the matter of disclosure in this application. This CNT structure behaves to the known carbon nanotubes of the simple scroll type in terms of structure like the multi-wall cylindrical monocarbon nanotubes (cylindrical MWNT) to the single-wall cylindrical carbon nanotubes (cylindrical SWNT).

Unlike in the onion-type structures still described occasionally in the prior art, the individual graphene or graphite layers in the novel carbon nanotubes evidently run, when viewed in cross-section, continuously from the centre of the CNTs to the outside edge, without interruption. This can permit, for example, improved and more rapid intercalation of other materials into the tube structure, because more open edges are available as entry zones of the intercalates, as compared with CNTs having a simple scroll structure (Carbon 34, 1996, 1301-1303) or CNTs having an onion-type scroll structure (Science 263, 1994, 1744-1747).

The methods known today for the production of carbon nanotubes include arc discharge, laser ablation and catalytic processes. In many of these processes, carbon black, amorphous carbon and fibers having large diameters are formed as by-products. In the case of the catalytic processes, a distinction can be made between deposition on supported catalyst particles and deposition on metal centers formed *in situ* and having diameters in the nanometer range (so-called flow processes). In the case of production by the catalytic deposition of carbon from hydrocarbons that are gaseous under reaction conditions (CCVD; catalytic carbon vapor deposition hereinbelow), acetylene, methane, ethane, ethylene, butane, butene, butadiene, benzene and further carbon-containing starting materials are mentioned as possible carbon donors. Preferably, CNTs obtainable from catalytic processes are used.

The catalysts generally contain metals, metal oxides or decomposable or reducible metal components. For example, Fe, Mo, Ni, V, Mn, Sn, Co, Cu and others are mentioned as metals in the prior art. Although most of the individual metals have a tendency to form nanotubes, high yields and low amorphous carbon contents are advantageously achieved according to the prior art with metal catalysts that contain a combination of the above-mentioned metals. Preferably, CNTs obtainable by use of mixed catalysts are employed..

Particularly advantageous systems for the synthesis of CNTs are based on combinations of metals or metal compounds which contain two or more elements from the series Fe, Co, Mn, Mo, and Ni.

The formation of carbon nanotubes and the properties of the tubes that are formed are dependent in a complex manner on the metal component, or combination of a plurality of metal components, used as catalyst, the support material used and the interaction between the catalyst and the support, the starting material gas and partial pressure, the admixture of hydrogen or further gases, the reaction temperature and the residence time or the reactor used

A preferred embodyment of the invention is the use of carbon nanotubes prepared by a process according to WO 2006/050903 A2.

In all different processes described above using different catalysts, carbon nanotubes of different structure are being produced, which are obtained from the process usually in the form of carbon nanotube agglomerates.

For the invention preferably suitable carbon nanotubes can be obtained by processes which are being described in following literature:

The production of carbon nanotubes having diameters of less than 100 nm was described for the first time in EP 205 556 B1. In this case, the production is carried out using light (i.e. short- and medium-chained aliphatic or mono- or bi-nuclear aromatic) hydrocarbons and an iron-based catalyst, on which carbon carrier compounds are decomposed at a temperature above 800 to 900°C.

WO 86/03455A1 describes the production of carbon filaments which have a cylindrical structure with a constant diameter of from 3.5 to 70 nm, an aspect ratio (ratio of length to diameter) of greater than 100 and a core region. These fibrils consist of a large number of interconnected layers of ordered carbon atoms, which are arranged concentrically around the cylindrical axis of the fibrils. These cylinder-like nanotubes were produced by a CVD process from carbon-containing compounds by means of a metal-containing particle at a temperature of from 850°C to 1200°C.

A process for the production of a catalyst which is suitable for the production of conventional carbon nanotubes having a cylindrical structure has also become known from WO2007/093337A2. When this catalyst is used in a fixed bed, relatively high yields of cylindrical carbon nanotubes having a diameter in the range from 5 to 30 nm are obtained.

A completely different way of producing cylindrical carbon nanotubes has been described by Oberlin, Endo and Koyam (Carbon 14, 1976, 133). Aromatic hydrocarbons, for example benzene, are thereby reacted on a metal catalyst. The resulting carbon tube exhibits a well-defined, graphitic hollow core which has approximately the diameter of the catalyst particle, on which there is further, less graphitically ordered carbon. The authors suppose that the graphitic core is formed first by rapid catalytic growth, and then further carbon is deposited pyrolitically. The entire tube can be graphitized by treatment at high temperature (2500°C-3000°C).

Most of the above-mentioned processes (arc discharge, spray pyrolysis or CVD) are used today for the production of carbon nanotubes. The production of single-wall cylindrical carbon nanotubes is very expensive in terms of apparatus, however, and proceeds according to the known processes with a very low formation rate and often also with many secondary reactions, which result in a high proportion of undesirable impurities, that is to say the yield of such processes is comparatively low. For this reason, the production of such carbon nanotubes is still extremely expensive even today, and they are used in small amounts only for highly specialized applications. However, its use can also be considered fo this invention, but it is less preferably than the use of multi-walled carbon nanotubes of the cylinder or scroll type.

Today, the production of multi-walled carbon nanotubes in form of nested seamless cyclindrical tubes or in the form of scroll or onion type structure is being carried out commercially in large quantities by using catalytic processes. These processes usually result in higher productivity than the arc discharge process or other known processes and are being typically done in the kg range, i.e. for the production of several kg per day. Carbon nnotubes obtained from such processes are usually more cost efficient than singe-walled carbon nanotubes and thus, are being used as an additive for enhancement of product properties in various materials.The present invention provides ozonized carbon nanotubes in which about 2% to 10% functional oxygenated moieties in molar ratio have been attached to the surface of carbon nanotubes. The amount of oxygen-containing moieties which are attached to the surface of the carbon nanotubes is analysed by high-resolution XPS spectra through curve fitting and defined by percentage of functional oxygenated moieties on the surface.

The present invention provides ozonized carbon nanotubes which are easy to be dispersed into some polar inorganic and organic solvents and the formed dispersion can be stable for days. The polar solvents are preferable water and dimethyl formamide (DMF).

The present invention provides a method of ozonolysis of carbon nanotube. The method comprises exposing carbon nanotubes to an ozone/oxygen mixture in the presence of moisture to form ozonized carbon nanotubes. The exposure results in an ozonolysis reaction. The ozonolysis reaction preferably takes place in a vertical reactor, more preferably in a moving bed or in a fluidized bed with continuous ozone/oxygen mixture flow which is generated by a common ozone generator by using oxygen as gas supplier.

Preferably, the ozone/oxygen and water mixture is preferably continuously passed through the vertical reactor which is fed with carbon nanotubes, the flow rate is preferably from about 100L/hour to about 1000 L/hour, preferably from about 100 L/hour to about 200 L/hour.

The quantity of ozone in the ozone/oxygen mixture can be expressed by defining the percentage by weight of ozone in the mixture. Preferably, the exposure of carbon nanotubes is carried out with an ozone/oxygen mixture including a percentage of ozone from 1% to about 11 Vol.-%.

Preferably, the exposure of carbon nanotubes to ozone/oxygen mixture shall be carried out in the presence of water moisture. The exposure condition preferably includes a relative humidity of water vapour of up to 100% in the reaction zone, in particular the vertical reaction chamber, preferably at least 10% up to 100%, particular preferred 10% to 90%.

The exposure of the carbon nanotubes to ozone/oxygen mixture in the presence of water moisture takes place at a temperature of at last 200 °C. Preferably, the carbon nanotubes are contacted with ozone/oxygen mixture in the presence of water moisture at a temperature in the reaction zone of at last 120 °C, more preferably from 0 to 100 °C, most preferably 10 to 60 °C, particularly preferred from 20 to 50 °C.

The reaction time of ozonolysis of carbon nanotubes is up to 120 minutes, preferably, up to 60 minutes, most preferably up to 30 minutes.

Another subject matter of the invention is a carbon nanotubes material functionalized with oxygen containing chemical groups **characterized in that** the carbon nanotubes have at least 20 % -COOH groups and wherein the ratio of free -C=O groups to -COOH groups is at least 1 to 1.3, preferably at least 1 to 1.4.

A preferred carbon nanotubes material is obtained by carrying out the inventive process as described above.

A further subject matter of the invention is the use of the new carbon nanotubes material as an electrically conductive additive and/or mechanical reinforcement in polymer material, preferably in polyester, polyurethane or epoxy resins.

Another subject matter of the invention is the use of the new carbon nanotubes material as additive in cement or concrete material. This is due to the enhanced dispersing ability of the functionalized carbon nanotubes material.

### Examples

Ozone was produced by ozone generator (CF-G-3-10g, QinDaoGuoLin Industry Co. LTD, China) using oxygen as gas supplier. The ozone concentration in the gas mixture was strongly dependent on the initial oxygen flow rate. Generally, 1 g of pristine nanotubes was placed into a homemade vertical reactor. The ozone/oxygen mixture gas was continuously passed through the reactor chamber at room temperature during the oxidation process. The humidity in the reaction chamber varied in the range of 50 to 90 %.

### Example 1

1 g of pristine multi-walled carbon nanotubes was placed into a homemade vertical reactor. The ozone/oxygen mixture gas (flow rate 200L/hour, 3wt% of ozone) was continuously passed through the reactor chamber at room temperature during the oxidation process. The humidity in the reaction chamber was controlled from 50% to 90%. The reaction was allowed to proceed for a period of 30 min to 120 min.

Fourier transform infrared (FTIR) spectra were recorded on Perkin Elmer Spectrum One spectrometer. The nanotubes were pressed into a pellet with potassium bromide (KBr) together and scanned from 4000 cm⁻¹ to 800 cm⁻¹ at a resolution of 2 cm⁻¹.

FTIR is a typical method to characterize the surface modification of carbon nanotubes, when the carboxylic, hydroxyl, quinine, and long alkyl groups has been successful grafted onto nanotube surface. For pristine carbon nanotubes, the peak at 1580 cm⁻¹ is assigned to the stretching mode of ν(C=C) of double bonds in the nanotube backbone near the surface active sites. After ozone treatment, the intensity of peak around 1720 cm⁻¹ related to carboxylic groups increases. The ratio I₁₇₂₀/I₁₅₈₀ is a good measure for the number of carboxylic groups bound to the surface.

The broad band at 1170 cm⁻¹ is attributed to the vibration mode of ν (O-C-O) of ester or ν(C-O) of carboxylic acid. However, no significant difference could be found in the FTIR spectra for O₃-MWCNTs and H₂O assisted O₃-MWCNTs specimens. Experimental results confirmed that ozonolysis of carbon nanotubes with ozone/oxygen mixture successfully introduced oxygen-containing functional moieties onto surface of carbon nanotubes.

Herein the oxidation level for ozone treated MWCNTs could be revealed by the relative intensity of ν(C=O)/ ν(C=C) of FTIR spectra. Table 1 shows the dependence of FTIR peak ratio, namely ν(C=O)/ ν(C=C), on the reaction time at a constant of 3 wt % ozone concentration. For ozone treated MWCNTs, the oxidizing degree gradually increases with the reaction time in the 1.5-2 hr range and then tend to be stable. This suggests that the degree of oxidation for MWCNTs is mainly controlled by the surface active sites. However, with the existence of water vapour in the reaction chamber, the oxidizing degree of nanotubes exhibit around 5 times improvement and the increased trend stop completely after 0.5 hr treatment. This result suggests that water vapour could accelerate and intensify the oxidation progress for MWCNTs sample.

**Table 1 Relative adsorbance I₁₇₂₀/I₁₅₈₀ in oxidized carbon nanotubes as a function of reaction time**

| | | | | |
|---|---|---|---|---|
| Reaction time | 0 | 0,5 hour | 1 hour | 2 hour |
| *O₃*-MWCNTs | 0,11 | 0,52 | 0,50 | 0,49 |
| *H₂O-O₃-* MWCNTs | 0,11 | 0,16 | 0,25 | 0,36 |

Beside the water influence on the oxidizing degree of MWCNTs, the ozone concentration would also put an effect on it. Table 2 shows the relative intensity of ν(C=O)/ ν(C=C) dependence on the ozone concentration at 3 wt %, 5 wt % and 10 wt %, respectively. We could see that ν(C=O)/ ν(C=C) ratio of MWCNTs increased from 0.15 to 0.39 under 0.5 hr when ozone concentration increase from 56.7 mg/L to 89.9 mg/L. This demonstrated that the increase of ozone concentration could accelerate ozonolysis of carbon nanotubes too.

**Table 2 Relative adsorbance I₁₇₂₀/I₁₅₈₀ in oxidized carbon nanotubes as a function of ozone concentration**

| | | | |
|---|---|---|---|
| Ozone concentration (mg/L) | 56,7 | 72,3 | 89,9 |
| *O₃*-MWCNTs | 0,15 | 0,31 | 0,39 |

### Example 2

1 g of pristine multi-walled carbon nanotubes was placed into a homemade vertical reactor. The ozone/oxygen mixture gas (flow rate 200L/hour, 3wt% of ozone) was continuously passed through the reactor chamber at room temperature during the oxidation process. The humidity in the reaction chamber was controlled from 50% to 90%. The reaction was allowed to proceed for a period of 120 min.

X-ray photoelectron spectroscopy (XPS) measurement was performed using ESCALab 220I-XL electron spectrometer with Mg Kα (1253.6 eV) radiation.

To further characterize the surface states of MWCNTs before and after ozone treatment, XPS analysis was carried out for MWCNTs before and after ozone treatment. As seen from the general XPS spectra, the amount of oxygen is negligible for untreated nanotubes and it is largely enhanced for oxidized CNTs, respectively. Moreover, the relative intensity ratio of O atom to C atom summarized in Table 3 confirms the enhancement up to 0.07 for *O₃*-MWCNTs specimen, and 0.14 for *H₂O-O₃*-MWCNTs specimen comparable to 0.01 for pristine MWCNTs sample. This observation is also consistent with FTIR results where the relative intensity ratio of ν(C=O)/ ν(C=C) band are improved.

**Table 3 Chemical composition of the functional groups on nanotube surface for p-MWCNTs, O₃-MWCNTs and H₂O-O₃-MWCNTs samples (determined by XPS measurement)**

| Sample | O/C | C=C % (284.6 eV) | C-O% (286.0 eV) | C=O% (287.4 eV) | COOH% (289.3 eV) |
|---|---|---|---|---|---|
| *O₃*-MWCNTs | 0.07 | 55 | 16 | 14 | 15 |
| *H₂O-O₃-* MWCNTs | 0.14 | 45 | 15 | 16 | 24 |

Quantitative analyses for high-resolution C₁ₛ XPS spectra through curve fitting are carried out to determine the relative percentage of surface functionalities. In each spectrum, the main peak at 284.7 eV deduced from C₁ₛ peak is assigned to the C₁ₛ binding energy for the MWCNTs, which is the characteristic of graphite carbon. The shoulder of main peak is composed of three peaks for pristine MWCNTs specimen, contributed to the C₁ₛ of hydroxyl carbon (286.0 eV), that of carbonyl carbon (287.4 eV), as well as that of π-π* transitions of C₁ₛ excitation (∼291 eV). Notably, the featured π-π* transitions band disappear for the ozonized specimens, suggesting that conductive n network along MWCNTs is disrupted during the ozonolysis process.

This observation further implies that the ozonolysis is carried out not only at the end-caps of MWCNTs, but also along side-walls. In addition, the percentages of the functional oxygenated moieties on nanotube surfaces, i.e. hydroxyl groups, carbonyl groups, and carboxylic groups (ester) are improved from 28 % for pristine MWCNTs to 45 % for *O₃*-MWCNTs specimen, and reach to 55 % for *H₂O*-*O₃*-MWCNTs specimen. The increased oxidizing carbon species content, noted in water vapour atmosphere, is expected to arise from the water vapour accelerate oxidation process. Such improved trend of oxidized carbon species confirms that the ozonolysis can effectively generate functional oxygen-containing groups on the nanotube surface, which is in accordance with FTIR results discussed above.

### Example 3

1 g of pristine multi-walled carbon nanotubes was placed into a homemade vertical reactor. The ozone/oxygen mixture gas (flow rate 200L/hour, 3wt% of ozone) was continuously passed through the reactor chamber at room temperature during the oxidation process. The humidity in the reaction chamber was controlled from 50% to 90%. The reaction was allowed to proceed for a period of 120 min.

Surface morphology of nanotubes was characterized using a field-emission scanning electron microscope (SEM, HITACHI S-4800) and transmission electron microscope (TEM, FEI Tecnai G² 20).

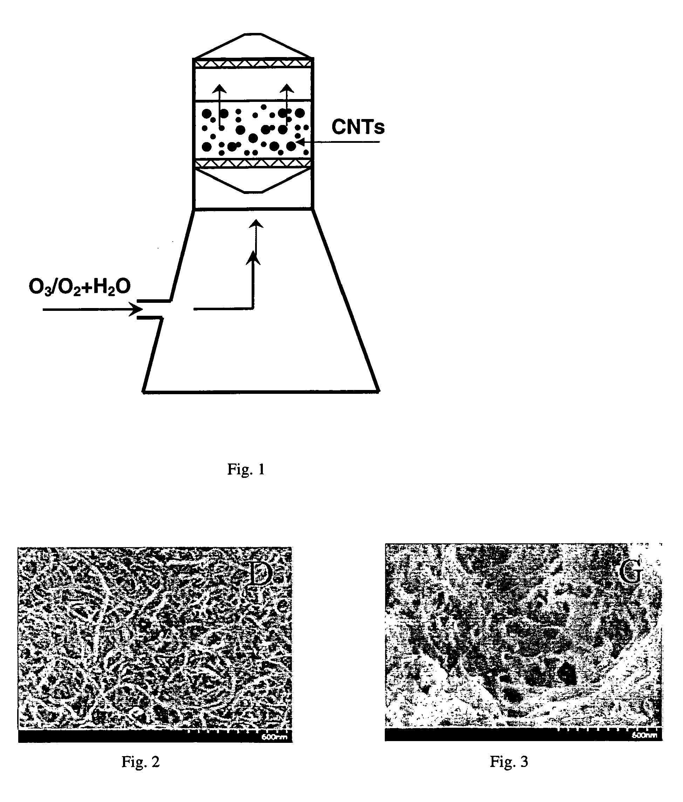

Pristine MWCNTs exhibit large aspect ratio and the nanotubes surface look smooth along its axis. Contrary to the acid treated nanotubes where nanotubes are cut into smaller fragments, the nanotubes of *O₃*-MWCNTs specimen keep almost the same aspect ratio as the pristine MWCNTs sample shown in Fig. 2 after 2 hr treatment. Fig. 3 is a SEM image of nanotubes treated with ozone/oxygen mixed gas in the presence of water vapour.

The nanotubes morphologies are significantly changed, and visible rough surface is covered by amorphous carbon particulates, indicating the remarkably oxidation effect of ozone/oxygen and water moisture mixture gas on the side-walls of carbon nanotubes. The partially destroyed side-walls of nanotubes implies that the oxidation reaction start from the outer-walls and end at the inner-walls through continuous etching of graphite sheets.

Fig. 2 and 3 represent TEM images of MWNTs after ozone treatment in absence (D) and presence (G) of water vapour.

### Example 4

1 g of pristine multi-walled carbon nanotubes was placed into a homemade vertical reactor. The ozone/oxygen mixture gas (flow rate 200L/hour, 3wt% of ozone) was continuously passed through the reactor chamber at room temperature during the oxidation process. The humidity in the reaction chamber was controlled from 50% to 90%. The reaction was allowed to proceed for a period of 120 min.

Thermogravimetric analysis (Diamond TG/DTA, PE) was employed to examine the thermal degradation of the samples. Experiments were carried out from room temperature to 900 °C at heating rate of 5 °C/min under nitrogen atmosphere. Before the experiments, all samples were dried at 120 °C in a vacuum oven overnight. Nitrogen isotherms were measured using an ASAP 2010 analyzer. All samples were degassed at 150 °C for 6 hr before tests.

The thermogravimetric analysis (TGA) of MWCNTs before and after ozone treatment in N₂ gas flow shows that pristine MWCNTs specimen are quite stable at temperature up to 450° C, then start slowly to decompose at the elevated temperature, and finally loose approximately 12 wt% of initial weight as temperature reach 900°C. After ozone treatment, the decomposition of *O₃*-MWCNTs sample is initiated at low temperature region, indicative of the de-functionalization of the oxygenated groups onto nanotube surface.

The final weight loss of functionalized sample is about 14 wt%, which is a little bit higher than that of pristine MWCNTs. The comparison of thermal stability between pristine MWCNTs and *O₃-*MWCNTs samples further confirm that the surface morphology of carbon nanotubes is not severely damaged during the ozonolysis, which is consistent with the previous TEM and SEM results. However, in contrast, the severe degradation of *H₂O*-*O₃*-MWCNTs sample starts at low temperature around 300° C. The initial weight loss arise from the decomposition of functional groups on surface, the subsequent weight loss of ca. 25 wt.% reveals the degradation of the defect sites rich carbon nanotube as well as amorphous carbon formed on the surface.

### Example 5

1 g of pristine multi-walled carbon nanotubes was placed into a homemade vertical reactor. The ozone/oxygen mixture gas (flow rate 200L/hour, 3wt% of ozone) was continuously passed through the reactor chamber at room temperature during the oxidation process. The humidity in the reaction chamber was controlled from 50% to 90%. The reaction was allowed to proceed for a period of 60 to 120 min.

Nitrogen adsorption measurements at 77K were carried out using an ASAP 2020 analyzer (Micromeritics). About 0.1 g sample was used for each measurement. The sample was firstly evacuated at 200 °C for 6 hr before testing.

Table 2 summarizes the specific area *S_{BET}* results for carbon nanotubes specimens before and after ozone treatment measured by N₂ physisorption at 77 K. Around 14% enhancement of S_{BET} was obtained for 2 hr treated O₃-MWCNTs sample with respect to pristine tubes. In general, around 30% improvement of specific surface area was obtained for oxidized acid treated nanotubes. Such difference for specific surface area between O₃-MWCNTs and acid oxidized nanotubes samples could be attributed to the less functionalized degree for nanotubes when ozone was using as an oxidant. In order to further improve specific surface area of nanotubes, it is a necessary to introduce more porous structure along tube surface. Porous-rich nanotubes were formed when water vapour was introduced into the reaction chamber. Consequently, around 47% improvement of specific surface area *S_{BET}* was achieved compared to pristine nanotubes.

**Table 4 Specific surface area of p-MWNT, O₃-MWNT and H₂O-O₃-MWNT**

| sample | S_{BET} (m²/g) |
|---|---|
| pristine | 230 |
| O₃-MWCNTs 2h | 262 |
| O₃-H₂O-MWCNTs 1h | 339 |

## Claims

1. Process of functionalization of carbon nanotubes by simultaneous treatment with oxygen/ozone in the gas phase comprising
a) placing carbon nanotubes into a reaction zone
b) passing a mixture of ozone, oxygen and water through the carbon nanotubes.

2. Process according to claim 1, **characterized in that** the mixture of ozone, oxygen and water is passed continuously through carbon nanotubes agglomerates.

3. Process according to claim 1 or 2, **characterized in that** the temperature in the reaction zone is at last 200 °C, preferably at last 120 °C, more preferably from 0 to 100 °C, most preferably 10 to 60 °C.

4. Process according to any of claims 1 to 3, **characterized in that** the reaction time of ozonolysis of carbon nanotubes is up to 120 minutes, preferably, up to 60 minutes, most preferably up to 30 minutes.

5. Process according to any of claims 1 to 4, **characterized in that** the exposure of carbon nanotubes is carried out with an ozone/oxygen mixture including a percentage of ozone from 1 Vol.-% to about 11 Vol.-%.

6. Process according to any of claims 1 to 5, **characterized in that** the flow rate of the mixture of ozone, oxygen and water is from about 100L/hour to about 1000 L/hour, preferably from about 100 L/hour to about 200 L/hour per 1 g of carbon nanotubes.

7. Process according to any of claims 1 to 6, **characterized in that** the relative humidity of water vapour in the reaction zone is up to 100%, preferably at least 10% up to 100%, particular preferred 10% to 90%.

8. Process according to any of claims 1 to 7, **characterized in that** the treatment b) of the carbon nanotubes is carried out in a vertical reaction chamber.

9. Process according to claim 8, **characterized in that** the treatment b) of the carbon nanotubes is carried out in a moving bed or in a fluidized bed.

10. Carbon nanotubes material functionalized with oxygen containing chemical groups **characterized in that** the carbon nanotubes have at least 20 % -COOH groups and wherein the ratio of free -C=O groups to -COOH groups is at least 1 to 1.3, preferably at least 1 to 1.4.

11. Carbon nanotubes material according to claim 10, obtained by a process according to any of claims 1 to 9.

12. Use of carbon nanotubes material according to claim 10 or 11 as electrically conductive additive and/or mechanical reinforcement in polymer material, preferably in polyester, polyurethane or epoxy resins.

13. Use of carbon nanotubes material according to claim 10 or 11 as additive in cement or concrete material.
